(19) Europäisches Patentamt
European Patent Office
Office européen des brevets

(11) **EP 4 350 010 A1**

(12) **EUROPÄISCHE PATENTANMELDUNG**

(43) Veröffentlichungstag:
**10.04.2024 Patentblatt 2024/15**

(21) Anmeldenummer: **22199799.2**

(22) Anmeldetag: **05.10.2022**

(51) Internationale Patentklassifikation (IPC):
***C21B 13/00*** (2006.01) ***C21B 13/14*** (2006.01)

(52) Gemeinsame Patentklassifikation (CPC):
**C21B 13/0073; C21B 13/002; C21B 13/143**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Austria GmbH**
**4031 Linz (AT)**

(72) Erfinder:
• **Hiebl, Bernhard**
**4073 Wilhering (AT)**

• **Ofner, Hanspeter**
**4055 Pucking (AT)**
• **Rein, Norbert**
**1060 Wien (AT)**
• **Wurm, Johann**
**4283 Bad Zell (AT)**

(74) Vertreter: **Metals@Linz**
**Primetals Technologies Austria GmbH**
**Intellectual Property Upstream IP UP**
**Turmstraße 44**
**4031 Linz (AT)**

(54) **EISENSCHMELZE AUS SINTER**

(57) Verfahren zur Herstellung einer Eisenschmelze (80) aus eisenoxidhaltigem Material (30), wobei ein zumindest Wasserstoff enthaltendes Reduktionsgas (90) einem das eisenoxidhaltige Material (30) enthaltenden Reduktionsreaktor (20) zur Vorreduktion zugeführt wird. Das eisenoxidhaltige Material (30) umfasst zumindest 35 Massen% Sinter, und das Reduktionsgas (90) umfasst zumindest 60 Volumsprozent Vol% Wasserstoff H2.

Bei der Vorreduktion erhaltenes festes vorreduzierte Produkt wird von dem Reduktionsreaktor (20) in eine Einschmelzvorrichtung (40) zugegeben und dort einer zumindest folgende Schritte umfassenden Behandlung unterworfen:

- Energiezufuhr zur Erzeugung einer Schmelze, wobei die Energiezufuhr im Wesentlichen aus Elektrizität erfolgt,
- Reduktion zumindest einer Teilmenge der im festen vorreduzierten Produkt enthaltenen Eisenoxide.

Die Behandlung kann auch Einstellung eines Kohlenstoffgehalts in der Schmelze umfassen.

Ein Reduktionsreaktor (20) zur Vorreduktion ist als Reduktionsschacht ausgeführt, der einen Eingabebereich (A) zur Eingabe des eisenoxidhaltigen Materials (30);
- einen Entnahmebereich (B) zur Entnahme des bei der Vorreduktion erhaltenen festen vorreduzierte Produktes,
- einen Einleitungsbereich (C) zur Einleitung von Reduktionsgas (90), aufweist, wobei der Reduktionsschacht unterhalb des Einleitungsbereichs (C) konisch ausgeführt ist mit einem Wandwinkel zur Vertikalen kleiner 20°,

und sich vom
Einleitungsbereich zum Entnahmebereich (B) hin verengt.

Eine Anlage zur Durchführung des erfindungsgemäßen Verfahrens umfasst

- einen Reduktionsreaktor (20) zur Direktreduktion von eisenoxidhaltigem Material,
- eine Einschmelzvorrichtung (60),
- eine Zugabevorrichtung (50) zur Eingabe von festem Produkt des Verfahrens zur Direktreduktion in die Einschmelzvorrichtung (60).

Fig. 1

**Beschreibung**

Gebiet der Technik

Die Anmeldung betrifft Verfahren und Vorrichtungen zur Herstellung einer Eisenschmelze aus eisenoxidhaltigem Material, welches Sinter umfasst,
wobei ein zumindest Wasserstoff enthaltendes Reduktionsgas zur Vorreduktion des eisenoxidhaltigen Materials eingesetzt wird und das Produkt der Vorreduktion geschmolzen wird.

Stand der Technik

Es ist bekannt, metalloxidhaltiges, beispielsweise eisenoxidhaltiges, Material - wie beispielsweise Stückerze, Oxidbriketts oder Pellets - mittels reduzierenden Gases zu reduzieren. So etwa mittels Direktreduktion mit Reduktionsgas in einem Reduktionsaggregat, wie beispielsweise einem Reduktionsschacht. Bei derzeit großindustriell angewendeten, herkömmlichen Vor- bzw. Direktreduktionsverfahren basiert das Reduktionsgas neben Wasserstoff überwiegend auf Kohlenstoff - beispielsweise in Kohlenmonoxid CO und/oder Methan $CH_4$ - aus Erdgas. Daher fallen dabei große Mengen Kohlendioxid $CO_2$ an, was unter anderem aus umweltpolitischen Gründen unerwünscht ist.

Es ist auch bekannt, über die Hochofenroute aus eisenoxidhaltigem Material - wie beispielsweise Sinter - zu flüssigem Roheisen zu reduzieren. Dabei wird in erster Linie mittels auf Kohle beziehungsweise Koks basierenden kohlenstoffhaltigen Gases reduziert, was bei dieser Produktionsroute zu großen Emissionen von Kohlendioxid $CO_2$ führt. Sinter wird aus auf Eisenerz basierendem Sinterfeed in Sinteranlagen erzeugt, die in der Regel räumlich nahe zu Hochöfen errichtet sind.

Zur Verminderung des $CO_2$-Ausstoßes bei der Reduktion von metalloxidhaltigem Material ist es bekannt, Wasserstoff $H_2$ als reduzierendes Gas einzusetzen. Dabei kann Wasserstoff als einziges Reduktionsgas verwendet werden, oder in Kombination mit anderen Gasen, die beispielsweise auf Kohlenstoff aus Erdgas oder auf Kohle beziehungsweise Koks basieren. Je größer der Anteil von bezüglich Reduktionsreaktionen $CO_2$-neutralem Wasserstoff $H_2$ im Reduktionsgas ist, desto weniger $CO_2$ wird emittiert. Je nach Verfügbarkeit von Erdgas oder anderen Gasen und von Wasserstoff kann das Verhältnis ihres Beitrags zum Reduktionsgas verändert werden, indem verschiedene Mengen gemischt werden.

Je mehr Wasserstoff zur Verfügung steht, desto mehr kann auf einen klimaproblematischen Beitrag auf Basis von Kohlenstoff aus Erdgas oder aus anderen Gasen verzichtet werden.

Es ist günstig, bestehende Anlagen und Verfahrensweisen, bei denen das Reduktionsgas überwiegend auf Kohlenstoff und teilweise Wasserstoff aus Erdgas oder anderen Gasen basiert, auch mit erhöhten Anteilen von Wasserstoff im Reduktionsgas zu betreiben.

Das ermöglicht flexibles Reagieren auf die Verfügbarkeit von Erdgas oder anderen Gasen und von Wasserstoff, und erlaubt die Ausnutzung bereits getätigter Anlageninvestitionen. Zumindest bis ausreichende Mengen Wasserstoff für Verwendung von vollständig auf Wasserstoff basierenden Reduktionsgasen zur Verfügung stehen, wird sich Reduktionsgas noch auf Kohlenstoff und Wasserstoff aus Erdgas oder anderen Gasen stützen müssen.

Es ist auch günstig, wenn bei einem Verzicht auf den Betrieb von Hochöfen und Umstellung auf andere Direkt- oder Schmelzreduktionsverfahren in integrierten Hüttenwerken bereits bestehende Anlagen auch nach der Umstellung im Reduktionsverfahren genutzt werden können - so dass auch nach einer Umstellung bereits getätigte Anlageninvestitionen weiter genutzt werden können.

Zusammenfassung der Erfindung

Technische Aufgabe

Es ist die Aufgabe der vorliegenden Erfindung, Verfahren und Vorrichtungen bereitzustellen, die es erlauben, abseits der Hochofenroute ausgehend von einem Sinter beinhaltenden eisenoxidhaltigen Material mit einem wasserstoffreichen Reduktionsgas eine Vorreduktion durchzuführen und roheisenähnliches Material bereitzustellen.

Technische Lösung

Die Aufgabe wird gelöst durch ein

Verfahren zur Herstellung einer Eisenschmelze, bevorzugt mit einem Kohlenstoffgehalt von 1 - 5 Massen%, aus eisenoxidhaltigem Material,
wobei ein zumindest Wasserstoff, gegebenenfalls auch Kohlenstoffträger, enthaltendes Reduktionsgas
einem das eisenoxidhaltige Material enthaltenden Reduktionsreaktor zur Vorreduktion zugeführt wird,
dadurch gekennzeichnet, dass
das eisenoxidhaltige Material zumindest 35 Massen% Sinter umfasst,
und das Reduktionsgas zumindest 60 Volumsprozent Vol% Wasserstoff H2 umfasst,
und bei der Vorreduktion erhaltenes festes vorreduziertes Produkt von dem Reduktionsreaktor, gegebenenfalls über eine Bunkervorrichtung, in eine Einschmelzvorrichtung zugegeben wird,
und dort einer zumindest folgende Schritte umfassenden Behandlung unterworfen wird:

- Energiezufuhr zur Erzeugung einer Schmelze, wobei die Energiezufuhr im Wesentlichen aus Elektrizität erfolgt,
- Reduktion zumindest einer Teilmenge der im festen vorreduzierten Produkt enthaltenen Eisenoxide,

wobei die Behandlung gegebenenfalls auch Einstellung eines Kohlenstoffgehalts in der Schmelze umfasst.

Das Verfahren erfolgt hochofenlos, also unter Verzicht auf die Kernkomponente der herkömmlichen Hochofenroute - das heißt, dass bei der Reduktion des eisenoxidhaltigen Materials kein Hochofen involviert ist. Das Verfahren wird hochofenlos betrieben. Das Verfahren erfolgt also abseits der herkömmlichen Hochofenroute. Der Reduktionsreaktor zur Vorreduktion ist kein Hochofen. Unter Vorreduktion ist eine Reduktion zu verstehen, an deren Ende im erhaltenen festen Produkt noch Eisenoxid vorhanden ist. Bei dem Reduktionsreaktor zur Vorreduktion handelt es sich um einen Reduktionsschacht - die Reduktion mittels des Reduktionsgases erfolgt in dem ein Festbett von eisenoxidhaltigem Material enthaltenden Reduktionsschacht. Eisenoxidhaltiges Material wird oben in den Reduktionsschacht eingegeben und durchwandert ihn der Schwerkraft folgend, wobei die Reduktionsreaktionen stattfinden.

Das Reduktionsgas enthält als reduzierend wirkende Komponente zumindest 60 Vol% Wasserstoff. Es kann auch aus Wasserstoff bestehen. Gegebenenfalls enthält das Reduktionsgas auch einen oder mehrere gasförmige Kohlenstoffträger als zusätzliche reduzierend wirkende Komponente beziehungsweise Komponenten. Kohlenstoffträger werden beispielsweise durch Erdgas beigesteuert; es handelt sich beispielsweise um durch Erdgas eingebrachtes oder aus Erdgas erzeugtes Kohlenmonoxid CO oder Methan $CH_4$.

Dabei kann es sich beispielsweise um grünen, blauen, grauen, türkisen, pinken Wasserstoff handeln. Unter diesen "Farben" ist die Farbgebung in Zusammenhang mit der zugrundeliegenden Produktionsart zu verstehen. Grüner Wasserstoff ist beispielsweise durch Elektrolyse von Wasser mittels Strom aus erneuerbaren Energien erzeugt, oder durch Vergasung oder Vergärung von Biomasse, oder Dampfreformierung von Biogas - gemeinsam ist den Produktionsarten von grünem Wasserstoff, dass die Produktion $CO_2$-frei erfolgt. Bei blauem Wasserstoff wird bei der Produktion entstehendes $CO_2$ gespeichert, so dass es nicht in die Atmosphäre gelangt; beispielsweise, wenn er unter Sequestrierung von entstehendem Kohlendioxid $CO_2$ erzeugt wurde. Bei türkisem Wasserstoff wird unter Abscheidung von entstehendem Kohlenstoff C erzeugt. Bei pinkem Wasserstoff wird Wasserstoff unter Verwendung von Atomstrom erzeugt. Bei grauem Wasserstoff wird aus fossilen Brennstoffen erzeugt - beispielsweise aus Erdgas mittels Dampfreformierung - wobei das entstehende $CO_2$ überwiegend in die Atmosphäre abgegeben wird.

Auch in Frage kommen andere Farben des Wasserstoffs.

Ebenso in Frage kommt ein Gemisch aus einem oder mehreren dieser "Farben" des Wasserstoffs.

Wenn Kohlenstoffträger als zusätzliche reduzierend wirkende Komponenten vorhanden sind, gilt: das Verhältnis der Anteile von Wasserstoff und Kohlenstoffträgern im Reduktionsgas kann beispielsweise durch Vereinigung verschiedener Mengen bei der Zubereitung des Reduktionsgases variiert werden. Beispielsweise kann so variiert werden, dass der Anteil des Wasserstoffs im Reduktionsgas zunimmt.

Das Reduktionsgas ist das in den Reduktionsreaktor eingeleitete Gas mit seiner bei der Einleitung vorliegenden Zusammensetzung und Temperatur. Bevor diese Zusammensetzung und Temperatur gegeben sind, liegt ein Vorläufer des Reduktionsgases vor, auf dessen Basis das Reduktionsgas zubereitet wird. Die Zubereitung kann beispielsweise umfassen Hinzugabe weiterer Komponenten, Erhitzung, Reformierung. Die Zubereitung kann auch durch im Vorläufer ohne äußeres Zutun ablaufende chemische Reaktionen umfassen, welche beispielsweise die chemische Zusammensetzung beziehungsweise die Temperatur ändern. Bei Veränderungen an der Zubereitung kann sich der Anteil des Wasserstoffs im Reduktionsgas ändern.

Die erfindungsgemäß hergestellte Eisenschmelze hat bevorzugt einen Kohlenstoffgehalt von 1,0 Massen% - 5 Massen%. Sie besteht überwiegend aus Eisen - es ist ein flüssiges, Roheisen-ähnliches Produkt; die Bezeichnung flüssiges, Roheisen-ähnliches Produkt wird in dieser Anmeldung synonym zu der Bezeichnung Eisenschmelze für die erfindungsgemäß hergestellte Eisenschmelze verwendet. Das flüssige, Roheisenähnliche Produkt, bevorzugt mit einem Kohlenstoffgehalt von 1,0 Massen% - 5 Massen%, ist aus der Perspektive eines Stahlerzeugungsverfahrens - beispielsweise LD/BOF - einem Roheisen aus einem Hochofen "ähnlich", das heißt, es kann weitgehend so verarbeitet werden wie Roheisen aus einem Hochofen, also mit Ausnahme des Hochofens der Hochofenroute der Stahlerzeugung folgend. Je höher der Kohlenstoffgehalt ist, desto mehr Kühlschrott kann bei nachfolgender Verarbeitung zu Stahl eingesetzt werden; eine höhere Menge Kühlschrott vermindert die CO2-Emissionen pro Mengeneinheit eines aus erfindungsgemäß hergestelltem flüssigen, Roheisen-ähnlichen Produkt produzierten Stahls.

Besonders bevorzugt beträgt der Kohlenstoffgehalt des flüssigen, Roheisen-ähnlichen Produktes zumindest 2,0 Massen%, ganz besonders bevorzugt zumindest 2,5 Massen%. Besonders bevorzugt beträgt der Kohlenstoffgehalt des flüssigen, Roheisen-ähnlichen Produktes bis zu 4,7 Massen%, ganz besonders bevorzugt bis zu 4,5 Massen%.

Nach einer bevorzugten Ausführungsform erfolgt die Zugabe des bei der Vorreduktion erhaltenen festen vorreduzierten Produkts in die Einschmelzvorrichtung über eine Bunkervorrichtung. Das erleichtert Dosierung des festen vorreduzierten Produkts in die Einschmelzvorrichtung.

Die Energiezufuhr erfolgt im Wesentlichen, bevorzugt vollständig, aus Elektrizität, also mit elektrischer Energie. Im Wesentlichen bedeutet in diesem Zusammenhang zumindest 75 %, bevorzugt zumindest 80 %. Bei einer solchen Energiezufuhr aus Elektrizität entsteht kein CO2, was sich günstig auf die CO2-Bilanz des Verfahrens auswirkt.

Nach einer vorteilhaften Ausführungsform erfolgt die Einstellung des Kohlenstoffgehalts in der Schmelze mittels zugeführter Kohlenstoffträger.

Es kann sich um feste Kohlenstoffträger und/oder flüssige Kohlenstoffträger und/oder gasförmige Kohlenstoffträger handeln. Die Kohlenstoffträger können beispielsweise Kohlestaub, Koksgrus, Graphitstaub, oder Erdgas umfassen. Die Kohlenstoffträger können auch teilweise oder ganz aus kohlenstoffneutralen Quellen stammen, beispielsweise aus Biomasse, wie etwa Holzkohle; das verbessert die CO2-Bilanz des Verfahrens. Die Kohlenstoffträger können beispielsweise über Lanzen oder Unterbaddüsen eingebracht werden.

Es ist jedoch auch möglich, dass bei der Behandlung keine Einstellung des Kohlenstoffgehalts stattfindet, weil das feste vorreduzierte Produkt bereits ausreichend viel Kohlenstoff enthält.

Nach einer vorteilhaften Ausführungsform erfolgt die Einstellung des Kohlenstoffgehalts in der Schmelze mittels zugeführten Sauerstoffs. Sollte der Kohlenstoffgehalt über dem gewünschten Wert für die Eisenschmelze liegen, kann durch Sauerstoffzufuhr oxidative Verminderung des Kohlenstoffgehaltes erreicht werden, beispielsweise kann Kohlenstoff in der Schmelze zu CO reagieren und gasförmig aus der Schmelze entweichen.

Nach einer vorteilhaften Ausführungsform erfolgt die Reduktion zumindest einer Teilmenge der im festen vorreduzierten Produkt enthaltenen Eisenoxide mittels zugeführter Kohlenstoffträger.

Es kann sich um feste Kohlenstoffträger und/oder flüssige Kohlenstoffträger und/oder gasförmige Kohlenstoffträger handeln. Die Kohlenstoffträger können beispielsweise Kohlestaub, Koksgrus, Graphitstaub, oder Erdgas umfassen. Die Kohlenstoffträger können auch teilweise oder ganz aus kohlenstoffneutralen Quellen stammen, beispielsweise aus Biomasse, wie etwa Holzkohle; das verbessert die CO2-Bilanz des Verfahrens.

Vorteilhafte Wirkungen der Erfindung

Der Einsatz von Wasserstoff im Reduktionsgas erlaubt es, Vor- oder Direktreduktion unter Verminderung oder Vermeidung von Kohlendioxid CO2-Emissionen durchzuführen. Je höher der Wasserstoffanteil im Reduktionsgas im Vergleich zu Kohlenstoffträgern, die bei der Vor- oder Direktreduktion Kohlendioxid $CO_2$ ergeben, ist, desto mehr Kohlendioxid CO2-Emissionen können vermieden werden. Das ist ökologisch sinnvoll.

Der Einsatz von Sinter erlaubt es, bestehende, für einen Betrieb der herkömmlichen Hochofenroute getätigte Investitionen für Sinteranlagen auch für ein auf Hochöfen verzichtendes Verfahren zu nutzen. Das ist ökonomisch und ökologisch sinnvoll.

Einsatz von Sinter als Komponente der Festbett-Beschickung in einem Reduktionsschacht ist grundsätzlich bekannt - siehe beispielsweise "Reducing process of sinter in COREX shaft furnace and influence of sinter proportion on reduction properties in composite burden" von Shi Ben-jing et al. in J. Cent. South Univ. (2021) 28: 690 - 698, DOI 10.1007/s11771-021-4638-5. Dort wird jedoch zerfallsbedingt davon abgeraten, den Sinteranteil der Beschickung über 25 Massen% - 30 Massen% steigen zu lassen.

Im Gegensatz dazu wird das erfindungsgemäße Verfahren mit einem Sinteranteil im eisenoxidhaltigen Material der Beschickung von zumindest 35 Massen%, bevorzugt zumindest 50 Massen%, besonders bevorzugt über 50 Massen%, ganz besonders bevorzugt zumindest 60 Massen% durchgeführt. Wie die Erfinder der vorliegenden Anmeldung herausgefunden haben, ist mit dem vorgeschlagenen Verfahren mit hohem Wasserstoffanteil im Reduktionsgas eine stabile Verfahrensführung auch im bisher abgeratenen Bereich möglich und erlaubt eine wesentlich bessere Ausnutzung bestehender Sinteranlageninfrastruktur.

Der Rest der Beschickung kann beispielsweise eisenoxidhaltiges Material aus der Gruppe

- Stückerze,
- Oxidbriketts,
- Pellets

sein.

Der Einsatz eines im Wesentlichen elektrischen Einschmelzaggregates erlaubt es, mit den vorhandenen nachgeschalteten Prozessen gleichwertige Stahlprodukte herzustellen, welche mit dem EAF nicht möglich sind.

Bevorzugt ist es, dass die Vorreduktion zumindest bis zu einer Metallisierung von 70%, bevorzugt mindestens 80%, ganz besonders bevorzugt mindestens 85 % durchzuführen. Je höher metallisiert ist, desto mehr verringert sich ein Bedarf an Nachreduktion in nachgelagerten Behandlungsschritten des bei der Vorreduktion erhaltenen festen vorreduzierten Produktes. Unter dem Begriff Nachreduktion ist zu verstehen die Reduktion zumindest einer Teilmenge der im festen vorreduzierten Produkt noch enthaltenen Eisenoxide. Ein verringerter Bedarf an Nachreduktion ist besonders günstig, wenn die Nachreduktion zu Kohlendioxid CO2-Emissionen führt - beispielsweise bei Nachreduktion unter Nutzung von Kohlenstoff aus fossilen Quellen.

Die CO2-Emissionen können aber auch dadurch verringert werden, wenn Nachreduktion unter Nutzung von Kohlenstoff erfolgt, wenn der Kohlenstoff zur Nachreduktion aus Biomasse stammt.

Die Metallisierung - auch Metallisierungsgrad MG genannt -, die in % angegeben wird, ergibt sich aus dem Verhältnis von metallischem Eisen Fe met zu insgesamt vorhandenem Eisen Fe tot in einer Probe nach

$$MG\ [\%] = Fe\ met\ /\ Fe\ tot\ *\ 100.$$

Fe met: metallisches Eisen in einer Probe (Massenprozent m%)

Fe tot: insgesamt in der Probe enthaltenes Eisen (Massenprozent m%)

Da das feste Produkt der Vorreduktion - also das feste vorreduzierte Produkt - noch Eisenoxid enthält, liegt seine Metallisierung beziehungsweise sein Metallisierungsgrad MG unter 100 %.

Wenn die Temperatur des in den Reduktionsreaktor eingegebenen eisenoxidhaltigen Materials unter der Temperatur des Reduktionsgases liegt, wird es im Reduktionsreaktor vom Reduktionsgas aufgeheizt.

Bevorzugt ist es, das Verfahren mit einer Aufheizrate von zumindest 5°C pro Minute, bevorzugt zumindest 10 °C pro Minute, besonders bevorzugt zumindest 12°C pro Minute, im Reduktionsreaktor durchzuführen. Das minimiert Probleme, die sich aus Verweilen in bezüglich Übergang Hämatit zu Magnetit und in der Folge zu Wüstit - und damit verbunden druckfestigkeits- und schüttdruckbedingt - kritischen Temperaturbereichen ergeben.

Die maximal realisierbare Aufheizrate hängt von den physikalischen Randbedingungen bei der Aufheizung ab. Die Obergrenze der Aufheizrate liegt bei 50°C pro Minute, bevorzugt unter 30°C pro Minute.

Die Temperatur des Reduktionsgases liegt bevorzugt über 750°C, besonders bevorzugt über 800°C, ganz besonders bevorzugt über 850°C. Die Temperatur des Reduktionsgases liegt bevorzugt unter 1050°C, besonders bevorzugt unter 1020°C, ganz besonders bevorzugt unter 1000°C.

Wenn beispielsweise eisenoxidhaltiges Material mit einer Temperatur von 20°C in den Reduktionsreaktor eingegeben wird, soll es vom Reduktionsgas innerhalb von 60 Minuten auf eine 600°C höhere Temperatur aufgeheizt werden.

Die Partikelgröße des Sinters nach ISO4701 Third edition 2008 10 01 liegt bevorzugt im Bereich 5 mm - 40 mm, besonders bevorzugt im Bereich 8 mm- 32 mm, ganz besonders bevorzugt im Bereich 10 mm - 25 mm, wobei die Grenzen der Bereichsangaben mit umfasst sind mit einer Siebeffizienz von bis zu 5%. Die Siebeffizienz wird auch als Siebwirkungsgrad oder Siebgüte bezeichnet.

Bevorzugt ist es, wenn für die Kornstabilität des Sinters gilt, dass das Ergebnis eines an einer Probe des Sinters durchgeführten RDI-Tests nach ISO 4696-1 Third edition 2015-09-01 ergibt, dass der Anteil der Partikel, deren Partikelgröße kleiner 3,15 mm ist, kleiner oder gleich 30% ist. Die Kornstabilität wird mit RDI-Test nach ISO 4696-1 Third edition 2015-09-01 bestimmt; RDI steht für reduction degradation index. Mit einer derartigen Kornstabilität kann vermieden werden, dass es infolge von Kornzerfall zu schlechter Durchgasung und instabiler Verfahrensführung bei der Vorreduktion kommt.

Bevorzugt ist es, wenn der Sinter eine Basizität B2 größer 1 aufweist. Die Basizität B2 beträgt bevorzugt bis zu 2,5, besonders bevorzugt bis zu 2,2.

Die Basizität B2 ist gegeben durch das Verhältnis der Gewichtsprozent-Anteile von Calciumoxid CaO und von Siliziumdioxid SiO2 in einer Probe.

Basizität B2 = CaO/SiO2 (jeweils Gewichtsprozent-Anteil in einer Probe).

Dadurch wird das bei der Vorreduktion erhaltene feste vorreduzierte Produkt in nachgelagerten Behandlungsschritten mit entsprechender Basizitätsanforderung gut einsetzbar; während der nachgelagerten Behandlungsschritte beziehungsweise bei der Überführung des festen vorreduzierten Produktes vom Reduktionsreaktor zur Einschmelzvorrichtung brauchen keine Maßnahmen zur Einstellung der Basizität vorgenommen werden.

Die in der Einschmelzvorrichtung anfallende Schlacke hat vorzugsweise eine Basizität B2, die in einem Wertebereich von 0,9 bis 1,2 liegt, wobei die beiden Grenzwerte mit eingeschlossen sind.

In der Einschmelzvorrichtung fällt eine Schlacke an. Vorzugsweise hat die in der Einschmelzvorrichtung anfallende Schlacke eine Basizität B4, die in einem Wertebereich von 0,8 - 1,2 liegt, wobei die beiden Grenzwerte mit eingeschlossen sind.

Die Basizität B4 ist gegeben durch das Verhältnis der Summe der Gewichtsprozente-Anteile von Calciumoxid CaO und Magnesiumoxid MgO zur Summe der Gewichtsprozente Siliziumdioxid SiO2 und Aluminiumoxid Al2O3 in einer Probe.

Basizität B4 = (CaO + MgO)/(SiO2+Al2O3) (jeweils Gewichtsprozent-Anteil in einer Probe).

Bevorzugt erfolgt die Eingabe des eisenoxidhaltigen Materials in den Reduktionsreaktor in einem Eingabebereich weitgehend gleichmäßig über die Querschnittsfläche des Eingabebereichs.

Angestrebt ist eine gleichmäßige Verteilung, im Betriebsablauf werden jedoch betriebsbedingte trotzdem Abweichungen auftreten, was durch die Formulierung weitgehend gleichmäßig mit umfasst ist.

Die relevante Querschnittsfläche ist die Querschnittsfläche senkrecht zur Bewegungsrichtung des eisenoxidhaltigen Materials beim Durchwandern des Reduktionsreaktors von einem Eingabebereich zur Eingabe des eisenoxidhaltigen Materials zu einem Entnahmebereich zur Entnahme des bei der Vorreduktion erhaltenen festen vorreduzierten Produktes.

Weitgehend gleichmäßige Eingabe führt zu weitgehend gleichmäßiger Durchgasung des Festbetts und damit weitgehend gleichmäßiger Reduktion im Festbett. Das trägt zur Vermeidung lokaler Unterschiede im Metallisierungsgrad und in der Stabilität der Partikel des Festbetts bei. Das trägt dazu bei, dass das eisenoxidhaltige Material den Reduktionsreaktor weitgehend gleichmäßig durchwandert. Angestrebt ist ein gleichmäßiges Durchwandern, im Betriebsablauf werden jedoch betriebsbedingt trotzdem Abweichungen auftreten, was durch die Formulierung weitgehend gleichmäßig mit umfasst ist. Lokale Materialstaus werden somit weitgehend vermieden; angestrebt ist es, lokale Materialstaus gänzlich zu vermeiden; im Betriebsablauf können jedoch betriebsbedingt trotzdem lokale Materialstaus auftreten, was durch die Formulierung weitgehend vermieden mit umfasst ist.

Bevorzugt erfolgt die Eingabe so, dass Segregation des eisenoxidhaltigen Materials nach Größe und Dichte seiner Partikel weitgehend vermieden wird und eine gleichmäßige Gasverteilung über den Querschnitt sichergestellt wird. Angestrebt ist ein gänzliches Vermeiden; im Betriebsablauf wird jedoch betriebsbedingt trotzdem Segregation auftreten, was durch die Formulierung weitgehend gleichmäßig mit umfasst ist.

Das ist beispielsweise mittels einer kardanisch aufgehängten Verteilschurre wie in WO2006056350A1 gezeigt realisierbar, beispielsweise wie in WO2017055419A1 gezeigt.

Das bei der Vorreduktion erhaltene feste vorreduzierte Produkt wird in einem Entnahmebereich aus dem Reduktionsreaktor entnommen. Bevorzugt erfolgt die Entnahme flächig über die Querschnittsfläche des Entnahmebereichs, beispielsweise über mehrere die Querschnittsfläche des Entnahmebereich weitgehend erfassende Austragsschnecken. Das trägt dazu bei, dass das eisenoxidhaltige Material den Reduktionsreaktor weitgehend gleichmäßig durchwandert. Lokale Materialstaus werden somit weitgehend vermieden. Weitgehend gleichmäßiges Durchwandern führt zu weitgehend gleichmäßiger Durchgasung des Festbetts und damit weitgehend gleichmäßiger Reduktion im Festbett. Das trägt zur Verminderung beziehungsweise Vermeidung lokaler Unterschiede im Metallisierungsgrad und in der Stabilität der Partikel des Festbetts bei. Die relevante Querschnittsfläche ist die Querschnittsfläche senkrecht zur Bewegungsrichtung des eisenoxidhaltigen Materials von einem Eingabebereich zur Eingabe des eisenoxidhaltigen Materials zu einem Entnahmebereich zur Entnahme des bei der Vorreduktion erhaltenen festen vorreduzierten Produktes.

Das Reduktionsgas wird in einem Einleitungsbereich in den Reduktionsreaktor eingeleitet. Bevorzugt erfolgt die Einleitung des Reduktionsgases in den Reduktionsreaktor weitgehend gleichmäßig über die Querschnittsfläche des Einleitungsbereichs. Weitgehend gleichmäßig bedeutet in diesem Zusammenhang, dass Reduktionsgas nicht nur am Rand des Reduktionsreaktors eingeleitet wird, sondern auch abseits des Randes in Richtung Mitte beziehungsweise in der Mitte des Reduktionsreaktors. Das kann beispielsweise durch in den Innenraum des Reduktionsreaktors hineinreichende, oder den Innenraum - im Fall einer runden Querschnittsfläche des Innenraums beispielsweise diametral oder als Sekante - durchquerende Gasverteilrohre erreicht werden.

Die relevante Querschnittsfläche ist die Querschnittsfläche senkrecht zur Bewegungsrichtung des eisenoxidhaltigen Materials von einem Eingabebereich zur Eingabe des eisenoxidhaltigen Materials zu einem Entnahmebereich zur Entnahme des festen Produktes des Verfahrens zur Direktreduktion.

Weitgehend gleichmäßige Einleitung über die Querschnittsfläche führt zu weitgehend gleichmäßiger Durchgasung des Festbetts und damit weitgehend gleichmäßiger Reduktion im Festbett. Das trägt zur Vermeidung lokaler Unterschiede im Metallisierungsgrad und in der Stabilität der Partikel des Festbetts bei. Das trägt dazu bei, dass das eisenoxidhaltige Material den Reduktionsreaktor weitgehend gleichmäßig durchwandert. Lokale Materialstaus werden somit weitgehend vermieden.

Die Einleitung ist beispielsweise wie in WO2013156548A1 gezeigt realisierbar.

Nach einer bevorzugten Ausführungsform wird das bei der Vorreduktion erhaltene feste vorreduzierte Produkt von dem Reduktionsreaktor über eine Bunkervorrichtung in die

Einschmelzvorrichtung zugegeben, wobei die Bunkervorrichtung als Druckschleuse wirkt. Es wird also eine Änderung des Druckes der das feste Produkt umgebenden Atmosphäre vorgenommen. Das erfolgt in der Bunkervorrichtung, die als Druckschleuse betreibbar ist. Dadurch kann vermieden werden, dass Reduktionsgas aus dem Reduktionsreaktor in die Einschmelzvorrichtung strömt, beziehungsweise, dass Gas aus der Einschmelzvorrichtung in den Reduktionsreaktor strömt.

Ein weiterer Gegenstand der vorliegenden Anmeldung ist ein Verfahren zur Herstellung von Stahl, wobei die Herstellung von Stahl auf Basis einer erfindungsgemäß hergestellten Eisenschmelze erfolgt.

Nach einer vorteilhaften Ausführungsform wird bei der Herstellung von Stahl das LD/BOF-Verfahren angewendet.

Vorzugsweise erfolgt das mit einem Schrotteinsatz von zumindest 10 Massen%, bevorzugt zumindest 15 Massen%, besonders bevorzugt zumindest 20 Massen%.

Ein weiterer Gegenstand der vorliegenden Anmeldung ist ein Reduktionsreaktor zur Vorreduktion des eisenoxidhaltigen Materials, der als Reduktionsschacht ausgeführt ist,

dadurch gekennzeichnet, dass
der Reduktionsschacht aufweist

- einen Eingabebereich zur Eingabe des eisenoxidhaltigen Materials;
- einen Entnahmebereich zur Entnahme des bei der Vorreduktion erhaltenen festen vorreduzierte Produktes,
- einen Einleitungsbereich zur Einleitung von Reduktionsgas,

wobei der Reduktionsschacht unterhalb des Einleitungsbereichs konisch ausgeführt ist mit einem Wandwinkel zur Vertikalen kleiner 20°, bevorzugt kleiner 10°, wobei er sich vom Einleitungsbereich zum Entnahmebereich hin verengt.

Bei vertikaler Anordnung der Längsachse des Reduktionsschachtes befindet sich der Eingabebereich im oberen Bereich des Reduktionsschachtes, der Entnahmebereich im unteren Bereich des Reduktionsschachtes. Der Einleitungsbereich befindet sich zwischen Eingabebereich und Entnahmebereich. Unterhalb des Einleitungsbereichs ist der Reduktionsschacht konisch ausgeführt, er verengt sich zum Entnahmebereich hin; der Durchmesser wird also zum Entnahmebereich hin geringer.

Die konische Ausführung mit kleinem Wandwinkel wirkt Brückenbildung und damit ungleichmäßigem Durchwandern des Reduktionsschachtes entgegen. Gewünscht ist weitgehend gleichmäßiges Durchwandern, welches im Zusammenhang mit Schüttgütern auch als Massenfluss bezeichnet wird. Lokale Materialstaus werden somit weitgehend vermieden. Weitgehend gleichmäßiges Durchwandern führt zu weitgehend gleichmäßiger Durchgasung des Festbetts und damit weitgehend gleichmäßiger Reduktion im Festbett. Das trägt zur Vermeidung lokaler Unterschiede im Metallisierungsgrad und in der Stabilität der Partikel des Festbetts bei. Es hat sich gezeigt, dass durch die konische Ausführung mit kleinem Wandwinkel des Reduktionsschachtes unterhalb des Einleitungsbereichs dem Auftreten von Problemen für gleichmäßige Entnahme des festen Produktes entgegengewirkt wird. Somit ist es selbst bei dem Sinteranteil des eisenoxidhaltigen Materials und dem Wasserstoffanteil des Reduktionsgases gemäß erfindungsgemäßem Verfahren möglich, eine stabile Verfahrensführung zu erreichen.

Bevorzugt ist der Reduktionsschacht oberhalb des Einleitungsbereichs weitgehend konisch ausgeführt, mit einem Wandwinkel kleiner 3° zur Vertikalen, bevorzugt zumindest 1° zur Vertikalen; er erweitert sich zum Einleitungsbereich hin. Weitgehend konisch bedeutet in diesem Zusammenhang, dass es neben konischen Teilabschnitten auch zylindrische Teilabschnitte geben kann. Diese Ausführung wirkt Brückenbildung und Schachthängern und damit ungleichmäßigem Durchwandern des Reduktionsschachtes entgegen. Bei vertikaler Anordnung der Längsachse des Reduktionsschachtes befindet sich der Eingabebereich im oberen Bereich des Reduktionsschachtes, der Entnahmebereich im unteren Bereich des Reduktionsschachtes. Der Einleitungsbereich befindet sich zwischen Eingabebereich und Entnahmebereich.

Bevorzugt umfasst der Reduktionsreaktor eine Eingabevorrichtung zur Eingabe von eisenoxidhaltigem Material, die geeignet ist zur weitgehend gleichmäßigen Eingabe über die Querschnittsfläche des Reduktionsschachtes im Eingabebereich.

Beispielsweise umfasst die Eingabevorrichtung einen Gimbal-Verteiler wie in WO2006056350A1 dargestellt.

Die relevante Querschnittsfläche ist die Querschnittsfläche senkrecht zur Bewegungsrichtung des eisenoxidhaltigen Materials beim Durchwandern des Reduktionsschachtes vom Eingabebereich zur Eingabe des eisenoxidhaltigen Materials zum Entnahmebereich zur Entnahme des festen Produktes des Verfahrens zur Direktreduktion. Das ist auch senkrecht zur Längsachse des Reduktionsschachtes.

Bevorzugt ist die Eingabevorrichtung geeignet zur Eingabe unter weitgehender Vermeidung von Segregation des eisenoxidhaltigen Materials nach Größe und/oder Dichte seiner Partikel.

Bevorzugt umfasst die Eingabevorrichtung eine Steuer- und/oder Regelvorrichtung, welche zur flexiblen Regelung und/oder Steuerung der Eingabe ausgebildet ist Eine Regelvorrichtung kann beispielsweise Meßdaten von zur Ermittlung der Gastemperatur oberhalb der Schüttung im Reduktionsschacht geeigneten Thermoelementen, und Meßdaten von zur Ermittlung der Gastemperatur in der Schüttung im Reduktionsschacht geeigneten Thermoelementen automatisch zur Regelung nutzen. Beispielsweise kann vom Betreiber ein Verteilungsprofil vorgegeben werden, das dann gesteuert und/oder geregelt umgesetzt wird.

Bevorzugt ist im Entnahmebereich eine Austragsvorrichtung vorhanden, die geeignet ist zur Entnahme flächig über die Querschnittsfläche des Reduktionsschachtes im Entnahmebereich. Beispielsweise umfasst die Austragsvorrichtung mehrere die Querschnittsfläche des Entnahmebereich weitgehend erfassende Austragsschnecken. Die relevante Querschnittsfläche ist die Querschnittsfläche senkrecht zur Bewegungsrichtung des eisenoxidhaltigen Materials von einem Eingabebereich zur Eingabe des eisenoxidhaltigen Materials zu einem Entnahmebereich zur Entnahme des festen Produktes des Verfahrens zur Direktreduktion. Das ist auch senkrecht zur Längsachse des Reduktionsschachtes.

Bevorzugt ist im Einleitungsbereich eine Einleitungsvorrichtung vorhanden, die geeignet ist zur Einleitung weitgehend gleichmäßig über die Querschnittsfläche des Reduktionsschachtes im Einleitungsbereich.

Beispielsweise umfasst die Einleitvorrichtung mehrere die Querschnittsfläche des Entnahmebereich weitgehend erfassende Einleitrohre.

Die relevante Querschnittsfläche ist die Querschnittsfläche senkrecht zur Bewegungsrichtung des eisenoxidhaltigen Materials von einem Eingabebereich zur Eingabe des eisenoxidhaltigen Materials zu einem Entnahmebereich zur Entnahme des festen Produktes des Verfahrens zur Direktreduktion. Das ist auch senkrecht zur Längsachse des Reduktionsschachtes.

Ein weiterer Gegenstand der vorliegenden Anmeldung ist eine Anlage zur Durchführung des erfindungsgemäßen Verfahrens zur Herstellung einer Eisenschmelze dadurch gekennzeichnet, dass sie umfasst

- einen Reduktionsreaktor zur Direktreduktion von eisenoxidhaltigem Material nach einem der Ansprüche 12 bis 13,
- eine Einschmelzvorrichtung,
- eine Zugabevorrichtung zur Eingabe von festem Produkt des Verfahrens zur Direktreduktion in die Einschmelzvorrichtung.

Die Einschmelzvorrichtung umfasst Vorrichtungen zur Zufuhr elektrischer Energie.

Nach einer bevorzugten Ausführungsform umfasst die Zugabevorrichtung eine Bunkervorrichtung.

Nach einer bevorzugten Ausführungsform wird umfasst die Zugabevorrichtung eine als Druckschleuse wirkende Bunkervorrichtung.

Nach einer bevorzugten Ausführungsform wird umfasst die Anlage zur Durchführung des erfindungsgemäßen Verfahrens auch eine Vorrichtung zur Einstellung des Kohlenstoffgehalts; beispielsweise eine Vorrichtung zur Zugabe von kohlenstoffhaltigem Material in die Einschmelzvorrichtung, oder eine Vorrichtung zur Zugabe von Sauerstoff in die Einschmelzvorrichtung.

Es kann auch eine Zugabevorrichtung zur Zugabe von Zuschlägen in die Einschmelzvorrichtung vorhanden sein. Zuschläge werden beispielsweise zugegeben, um eine gewünschte Basizität der in der Einschmelzvorrichtung anfallenden Schlacke einzustellen.

Ein weiterer Gegenstand der vorliegenden Anmeldung ist eine Signalverarbeitungseinrichtung mit einem maschinenlesbaren Programmcode, dadurch gekennzeichnet, dass er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines Verfahrens nach einem der Ansprüche 1 bis 11.

Ein weiterer Gegenstand der vorliegenden Anmeldung ist ein maschinenlesbarer Programmcode für eine Signalverarbeitungseinrichtung, dadurch gekennzeichnet, dass der Programmcode Steuer und/oder Regelbefehle aufweist, welche die Signalverarbeitungseinrichtung zur Durchführung eines erfindungsgemäßen Verfahrens veranlassen. Bei einem weiteren Gegenstand handelt es sich um ein Computerprogrammprodukt umfassend Befehle für eine Signalverarbeitungseinrichtung, die bei der Ausführung des Programms für die Signalverarbeitungsvorrichtung diese veranlassen, das Verfahren nach einem der Ansprüche 1 bis 11 durchzuführen.

Ein weiterer Gegenstand der vorliegenden Anmeldung ist ein Speichermedium mit einem darauf gespeicherten erfindungsgemäßen maschinenlesbaren Programmcode. Bei einem weiteren Gegenstand handelt es sich um ein Speichermedium mit einem darauf gespeicherten Computerprogramm zur Durchführung eines Verfahrens nach einem der Ansprüche 1 bis 11.

Kurze Beschreibung der Zeichnungen

Nachfolgend wird die vorliegende Erfindung anhand mehrerer schematischer Figuren beispielhaft beschrieben.

Figur 1 zeigt schematisch eine erfindungsgemäße Anlage.
Figuren 2 zeigt schematisch einen erfindungsgemäßem Reduktionsreaktor zur Vorreduktion.

Beschreibung der Ausführungsformen

Beispiele

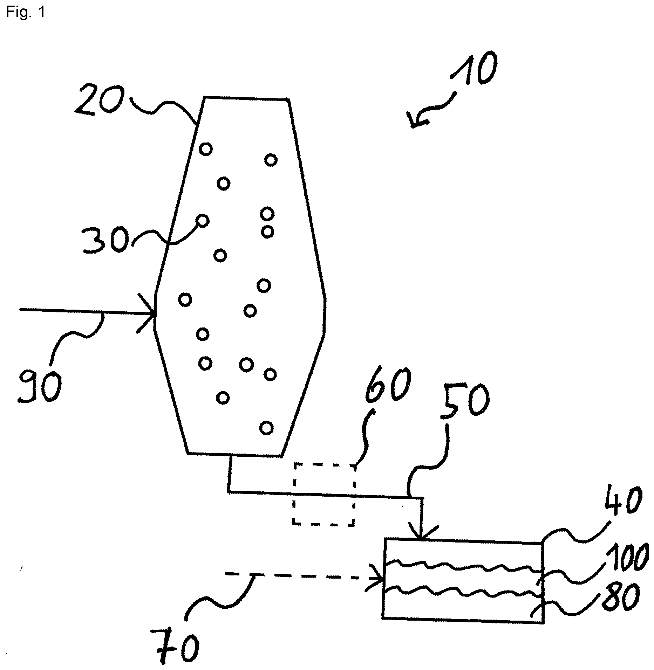

Figur 1 zeigt schematisch eine Anlage 10, die einen Reduktionsreaktor 20 zur Direktreduktion von eisenoxidhaltigem Material 30, eine Einschmelzvorrichtung 40 und eine Zugabevorrichtung 50 zur Eingabe von im Reduktionsreaktor 20 hergestelltem festen Produkt in die Einschmelzvorrichtung 40. Optional und daher strichliert dargestellt ist eine von der Zugabevorrichtung 50 umfasste als Druckschleuse wirkende Bunkervorrichtung 60. Ebenfalls optional und daher strichliert schematisch dargestellt ist eine Vorrichtung zur Einstellung des Kohlenstoffgehalts 70- die beispielsweise eine Vorrichtung zur Zugabe von kohlenstoffhaltigem Material in die Einschmelzvorrichtung 40, oder eine Vorrichtung zur Zugabe von Sauerstoff in die Einschmelzvorrichtung 40.

Zur Herstellung der Eisenschmelze 80 aus dem - beispielsweise mehr als 50 Massen% - Sinter umfassenden - eisenoxidhaltigem Material 30 wird ein mehr als 60 Volumsprozent Vol% Wasserstoff $H_2$ enthaltendes Reduktionsgas 90 dem das eisenoxidhaltige Material 30 enthaltenden Reduktionsreaktor 20 zur Vorreduktion zugeführt. Die Partikelgröße des Sinters liegt beispielsweise im Bereich 8 mm - 32 mm. Vorzugsweise ist seine Basizität B2 größer 1.

Wenn die Temperatur des in den Reduktionsreaktor 20 eingegebenen eisenoxidhaltigen Materials 30 unter der Temperatur des Reduktionsgases 90 liegt, wird es im

Reduktionsreaktor 20 vom Reduktionsgas 90 aufgeheizt; dabei ist eine Aufheizrate von beispielsweise 10°C pro Minute günstig.

Das bei der Vorreduktion im Reduktionsreaktor 10 erhaltene feste vorreduzierte Produkt enthält noch Eisenoxide. Bevorzugt ist es zu zumindest 70 % metallisiert. Es wird von dem Reduktionsreaktor 20, gegebenenfalls über die optionale Bunkervorrichtung 60, in die Einschmelzvorrichtung 40 zugegeben. Dort wird daraus die Eisenschmelze, bevorzugt mit einem Kohlenstoffgehalt von 1 - 5 Massen%, hergestellt. Die Behandlung zur Herstellung der Eisenschmelze 80 umfasst zumindest Energiezufuhr zur Erzeugung einer Schmelze und Reduktion zumindest einer Teilmenge der im festen vorreduzierten Produkt enthaltenen Eisenoxide. Gegebenenfalls umfasst sie auch Einstellung eines Kohlenstoffgehalts in der Schmelze mit der optionalen Vorrichtung zur Einstellung des Kohlenstoffgehalts 70.

Die Energiezufuhr erfolgt dabei im Wesentlichen aus Elektrizität.

Bei der Behandlung in der Einschmelzvorrichtung 40 entsteht eine Schlacke 100, deren Basizität B2 bevorzugt zwischen 0,9 und 1,2 liegt. Auf die Darstellung einer optional vorhandenen Zugabevorrichtung zur Zugabe von Zuschlägen in die Einschmelzvorrichtung 40 wird aus Gründen der Übersichtlichkeit verzichtet.

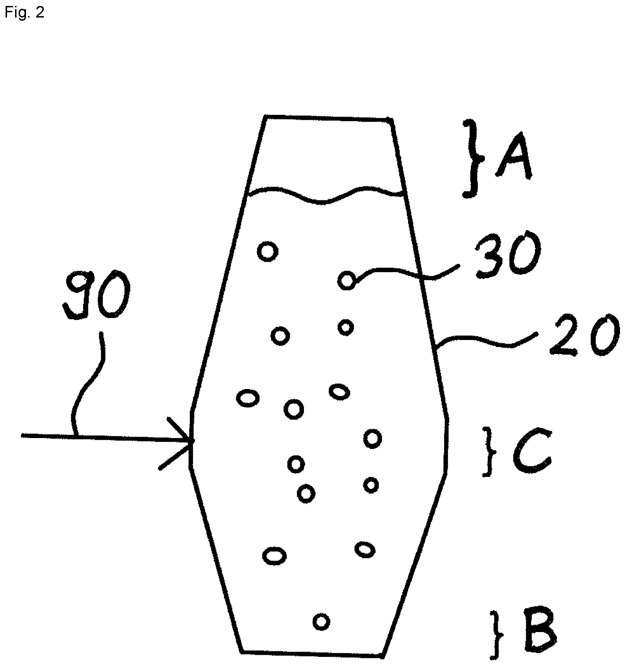

Figur 2 zeigt schematisch den Reduktionsreaktor 20 zur Vorreduktion des eisenoxidhaltigen Materials 30 vergrößert. Er ist als Reduktionsschacht ausgeführt, wobei er einen Eingabebereich A zur Eingabe des eisenoxidhaltigen Materials 30, einen Entnahmebereich B zur Entnahme des bei der Vorreduktion erhaltenen festen vorreduzierte Produktes, und einen Einleitungsbereich C zur Einleitung von Reduktionsgas 90 aufweist.

Der Reduktionsschacht 20 ist unterhalb des Einleitungsbereichs C konisch ausgeführt.

Sein Wandwinkel zur Vertikalen ist dabei kleiner 20°, er verengt sich vom Einleitungsbereich C zum Entnahmebereich B hin.

In der dargestellten Ausführungsform ist der Reduktionsschacht oberhalb des Einleitungsbereichs konisch ausgeführt mit einem Wandwinkel zwischen 1° und 3° zur Vertikalen - hier nicht maßstabsgetreu übertrieben dargestellt.

Liste der Anführungen

Patentliteratur

WO2006056350A1

WO2017055419A1

WO2013156548A1

Nichtpatentliteratur

"Reducing process of sinter in COREX shaft furnace and influence of sinter proportion on reduction properties in composite burden" von Shi Ben-jing et al. in J. Cent. South Univ. (2021) 28: 690 - 698, DOI 10.1007/s11771-021-4638-5

ISO4701 Third edition 2008 10 01

ISO 4696-1 Third edition 2015-09-01

Liste der Bezugzeichen

| | |
|---|---|
| 10 | Anlage |
| 20 | Reduktionsreaktor |
| 30 | eisenoxidhaltiges Material |
| 40 | Einschmelzvorrichtung |
| 50 | Zugabevorrichtung |
| 60 | Bunkervorrichtung |
| 70 | Vorrichtung zur Einstellung des Kohlenstoffgehalts |
| 80 | Eisenschmelze |
| 90 | Reduktionsgas |
| 100 | Schlacke |
| | |
| A | Eingabebereich |
| B | Entnahmebereich |
| C | Einleitungsbereich |

**Patentansprüche**

1. Verfahren zur Herstellung einer Eisenschmelze (80), bevorzugt mit einem Kohlenstoffgehalt von 1 - 5 Massen%, aus eisenoxidhaltigem Material (30),

   wobei ein zumindest Wasserstoff, gegebenenfalls auch Kohlenstoffträger, enthaltendes Reduktionsgas (90)
   einem das eisenoxidhaltige Material (30) enthaltenden Reduktionsreaktor (20) zur Vorreduktion zugeführt wird,
   **dadurch gekennzeichnet, dass**
   das eisenoxidhaltige Material (30) zumindest 35 Massen% Sinter umfasst,
   und das Reduktionsgas (90) zumindest 60 Volumsprozent Vol% Wasserstoff H2 umfasst, und
   bei der Vorreduktion erhaltenes festes vorreduziertes Produkt von dem Reduktionsreaktor (20), gegebenenfalls über eine Bunkervorrichtung (60), in eine Einschmelzvorrichtung (40) zugegeben wird,
   und dort einer zumindest folgende Schritte umfassenden Behandlung unterworfen wird:

   - Energiezufuhr zur Erzeugung einer Schmelze, wobei die Energiezufuhr im Wesentlichen aus Elektrizität erfolgt,
   - Reduktion zumindest einer Teilmenge der im festen vorreduzierten Produkt enthaltenen Eisenoxide,

   wobei die Behandlung gegebenenfalls auch Einstellung eines Kohlenstoffgehalts in der Schmelze umfasst.

2. Verfahren nach Anspruch 1, **dadurch gekenn-**

zeichnet, dass die Vorreduktion zumindest bis zu einer Metallisierung von 70%, bevorzugt mindestens 80%, ganz besonders bevorzugt mindestens 85 % durchgeführt wird.

3. Verfahren nach Anspruch 1 oder 2, **dadurch gekennzeichnet, dass** es mit einer Aufheizrate von zumindest 5°C pro Minute, bevorzugt zumindest 10 °C pro Minute, besonders bevorzugt zumindest 12°C pro Minute, im Reduktionsreaktor (20) durchgeführt wird.

4. Verfahren nach einem der vorhergehenden Ansprüche, **dadurch gekennzeichnet, dass** die Partikelgröße des Sinters im Bereich 5 mm - 40 mm, besonders bevorzugt im Bereich 8 mm- 32 mm, ganz besonders bevorzugt im Bereich 10 mm - 25 mm, liegt, wobei die Grenzen der Bereichsangaben mit umfasst sind mit einer Siebeffizienz nach ISO4701 Version aus dem Jahre 2008 von bis zu 5%.

5. Verfahren nach einem der vorhergehenden Ansprüche, **dadurch gekennzeichnet, dass** für die Kornstabilität des Sinters gilt, dass das Ergebnis eines an einer Probe des Sinters durchgeführten RDI-Tests nach ISO 4696-1 Third edition 2015-09-01 ergibt, dass der Anteil der Partikel, deren Partikelgröße kleiner 3,15 mm ist, kleiner oder gleich 30% ist.

6. Verfahren nach einem der vorhergehenden Ansprüche, **dadurch gekennzeichnet, dass** der Sinter eine Basizität B2 größer 1 aufweist.

7. Verfahren nach einem der vorhergehenden Ansprüche, wobei das eisenoxidhaltige Material (30) in einem Eingabebereich in den Reduktionsreaktor (20) eingegeben wird, **dadurch gekennzeichnet, dass** es weitgehend gleichmäßig über die Querschnittsfläche des Eingabebereichs eingegeben wird.

8. Verfahren nach einem der vorhergehenden Ansprüche, wobei das bei der Vorreduktion erhaltene feste vorreduzierte Produkt in einem Entnahmebereich aus dem Reduktionsreaktor (20) entnommen wird, **dadurch gekennzeichnet, dass** es flächig über die Querschnittsfläche des Entnahmebereichs entnommen wird.

9. Verfahren nach einem der vorhergehenden Ansprüche, wobei das Reduktionsgas (90) in einem Einleitungsbereich in den Reduktionsreaktor (20) eingeleitet wird, **dadurch gekennzeichnet, dass** es weitgehend gleichmäßig über die Querschnittsfläche des Einleitungsbereichs eingeleitet wird.

10. Verfahren nach einem der vorhergehenden Ansprüche, **dadurch gekennzeichnet, dass** das bei der Vorreduktion erhaltene feste vorreduzierte Produkt von dem Reduktionsreaktor (20) über eine Bunkervorrichtung (60) in die Einschmelzvorrichtung (40) zugegeben wird, wobei die Bunkervorrichtung (60) als Druckschleuse wirkt.

11. Verfahren zur Herstellung von Stahl, wobei die Herstellung von Stahl auf Basis einer gemäß einem der Ansprüche 1-10 hergestellten Eisenschmelze (80) erfolgt.

12. Reduktionsreaktor (20) zur Vorreduktion von eisenoxidhaltigem Material, das zumindest 35 Massen% Sinter umfasst, der als Reduktionsschacht ausgeführt ist,

> **dadurch gekennzeichnet, dass**
> der Reduktionsschacht aufweist
>
> > - einen Eingabebereich (A) zur Eingabe des eisenoxidhaltigen Materials (30);
> > - einen Entnahmebereich (B) zur Entnahme des bei der Vorreduktion erhaltenen festen vorreduzierte Produktes,
> > - einen Einleitungsbereich (C) zur Einleitung von Reduktionsgas (90),
>
> wobei der Reduktionsschacht unterhalb des Einleitungsbereichs (C) konisch ausgeführt ist mit einem Wandwinkel zur Vertikalen kleiner 20°, bevorzugt kleiner 10°, wobei er sich vom Einleitungsbereich zum Entnahmebereich (B) hin verengt.

13. Reduktionsreaktor (20) nach Anspruch 12, **dadurch gekennzeichnet, dass** der Reduktionsschacht oberhalb des Einleitungsbereichs (C) weitgehend konisch ausgeführt ist, mit einem Wandwinkel kleiner 3° zur Vertikalen, bevorzugt zumindest 1° zur Vertikalen, und er sich zum Einleitungsbereich (C) hin erweitert.

14. Anlage zur Durchführung des erfindungsgemäßen Verfahrens zur Herstellung einer Eisenschmelze (80) **dadurch gekennzeichnet, dass** sie umfasst

> - einen Reduktionsreaktor (20) zur Direktreduktion von eisenoxidhaltigem Material (30) nach einem der Ansprüche 13 bis 16,
> - eine Einschmelzvorrichtung (60),
> - eine Zugabevorrichtung (50) zur Eingabe von festem Produkt des Verfahrens zur Direktreduktion in die Einschmelzvorrichtung (60).

15. Anlage nach Anspruch 14, **dadurch gekennzeichnet, dass** sie eine Vorrichtung zur Einstellung des Kohlenstoffgehalts (70) umfasst.

Fig. 1

Fig. 2

**Europäisches Patentamt**
**European Patent Office**
**Office européen des brevets**

## EUROPÄISCHER RECHERCHENBERICHT

Nummer der Anmeldung

EP 22 19 9799

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/363075 A1 (HOLZLEITHNER FRANZ [AT] ET AL) 20. Dezember 2018 (2018-12-20) * Absätze [0011], [0043], [0058]; Anspruch 15; Abbildung 1 * ----- | 1-11 | INV. C21B13/00 C21B13/14 |
| X | US 2016/168652 A1 (MILLNER ROBERT [AT]) 16. Juni 2016 (2016-06-16) * Absätze [0018], [0020], [0034]; Anspruch 1; Abbildung 1 * ----- | 1-11 | |
| X | CA 2 345 470 A1 (VOEST ALPINE IND ANLAGEN [AT]) 13. April 2000 (2000-04-13) * Ansprüche 1-4; Abbildungen 1-4 * * Seite 10; Zeilen 7-9 * * Seite 15; Zeilen 28-34 * ----- | 1-11 | |
| X | EP 1 275 739 A2 (VOEST ALPINE IND ANLAGEN [AT]) 15. Januar 2003 (2003-01-15) * Absatz [0054]; Ansprüche 1,7; Abbildung 5 * ----- | 1-11 | RECHERCHIERTE SACHGEBIETE (IPC) |
| X | DE 10 2020 205493 A1 (SMS GROUP GMBH [DE]) 4. November 2021 (2021-11-04) * Absätze [0013], [0022], [0025], [0044], [0050]; Ansprüche 1,12; Abbildungen 2,3 * ----- | 1-11 | C21B C21C |
| X | EP 3 992 309 A1 (PRIMETALS TECHNOLOGIES AUSTRIA GMBH [AT]) 4. Mai 2022 (2022-05-04) * Ansprüche 1,2,14,15 * ----- | 1-11 | |
| X | US 6 379 423 B1 (VULETIC BOGDAN [DE]) 30. April 2002 (2002-04-30) * Ansprüche 1,2; Abbildung 1 * * Spalte 6; Zeilen 37-62 * ----- | 12-15 | |

Der vorliegende Recherchenbericht wurde für alle Patentansprüche erstellt

| Recherchenort | Abschlußdatum der Recherche | Prüfer |
|---|---|---|
| Den Haag | 16. Februar 2023 | Momeni, Mohammad |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 9799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2023

| Im Recherchenbericht angeführtes Patentdokument | Datum der Veröffentlichung | Mitglied(er) der Patentfamilie | Datum der Veröffentlichung |
|---|---|---|---|
| US 2018363075 A1 | 20-12-2018 | AU 2017255897 A1 | 24-05-2018 |
| | | CA 3004666 A1 | 02-11-2017 |
| | | CN 107312901 A | 03-11-2017 |
| | | CN 207537480 U | 26-06-2018 |
| | | EP 3239306 A1 | 01-11-2017 |
| | | KR 20180071373 A | 27-06-2018 |
| | | RU 2689342 C1 | 27-05-2019 |
| | | UA 120080 C2 | 25-09-2019 |
| | | US 2018363075 A1 | 20-12-2018 |
| | | WO 2017186782 A1 | 02-11-2017 |
| US 2016168652 A1 | 16-06-2016 | AU 2014286586 A1 | 21-01-2016 |
| | | BR 112015032879 A2 | 25-07-2017 |
| | | CA 2917074 A1 | 08-01-2015 |
| | | CN 105579593 A | 11-05-2016 |
| | | EP 2821509 A1 | 07-01-2015 |
| | | JP 2016526606 A | 05-09-2016 |
| | | KR 20160025621 A | 08-03-2016 |
| | | RU 2016102894 A | 03-08-2017 |
| | | US 2016168652 A1 | 16-06-2016 |
| | | WO 2015000604 A1 | 08-01-2015 |
| CA 2345470 A1 | 13-04-2000 | AT 407400 B | 26-02-2001 |
| | | AU 5270799 A | 26-04-2000 |
| | | BR 9914359 A | 26-06-2001 |
| | | CA 2345470 A1 | 13-04-2000 |
| | | EP 1117844 A1 | 25-07-2001 |
| | | IT MI991960 A1 | 22-03-2001 |
| | | WO 0020648 A1 | 13-04-2000 |
| EP 1275739 A2 | 15-01-2003 | AT 410324 B | 25-03-2003 |
| | | EP 1275739 A2 | 15-01-2003 |
| DE 102020205493 A1 | 04-11-2021 | CA 3181620 A1 | 04-11-2021 |
| | | CN 115485397 A | 16-12-2022 |
| | | DE 102020205493 A1 | 04-11-2021 |
| | | EP 4143351 A1 | 08-03-2023 |
| | | KR 20220157507 A | 29-11-2022 |
| | | WO 2021219277 A1 | 04-11-2021 |
| EP 3992309 A1 | 04-05-2022 | EP 3992309 A1 | 04-05-2022 |
| | | WO 2022090390 A1 | 05-05-2022 |
| US 6379423 B1 | 30-04-2002 | AT 407645 B | 25-05-2001 |
| | | AU 730729 B2 | 15-03-2001 |
| | | BR 9709685 A | 11-01-2000 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 22 19 9799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2023

| Im Recherchenbericht angeführtes Patentdokument | Datum der Veröffentlichung | Mitglied(er) der Patentfamilie | Datum der Veröffentlichung |
|---|---|---|---|
| | | CA       2255076 A1 | 18-12-1997 |
| | | CN       1222197 A | 07-07-1999 |
| | | CZ        287903 B6 | 14-03-2001 |
| | | DE      19625127 A1 | 18-12-1997 |
| | | EP       0904415 A1 | 31-03-1999 |
| | | ID         17048 A | 04-12-1997 |
| | | IN        191759 B | 27-12-2003 |
| | | JP     2001501673 A | 06-02-2001 |
| | | PL        330410 A1 | 10-05-1999 |
| | | SK        169598 A3 | 07-05-1999 |
| | | TR     199802556 T2 | 21-09-2001 |
| | | TW        422883 B | 21-02-2001 |
| | | US       6379423 B1 | 30-04-2002 |
| | | WO       9747773 A1 | 18-12-1997 |
| | | ZA        974570 B | 29-12-1997 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006056350 A1
- WO 2017055419 A1

- WO 2013156548 A1

**In der Beschreibung aufgeführte Nicht-Patentliteratur**

- **SHI BEN-JING et al.** *J. Cent. South Univ.,* 2021, vol. 28, 690-698